Europäisches Patentamt

European Patent Office

Office européen des brevets

(11) Publication number: **0 045 243**
**B1**

## EUROPEAN PATENT SPECIFICATION

(45) Date of publication of patent specification: **17.07.85**

(51) Int. Cl.⁴: **G 01 V 3/28**

(21) Application number: **81401158.1**

(22) Date of filing: **21.07.81**

(54) **Multiple-array induction logging tool.**

(30) Priority: **24.07.80 US 171687**

(43) Date of publication of application:
**03.02.82 Bulletin 82/05**

(45) Publication of the grant of the patent:
**17.07.85 Bulletin 85/29**

(84) Designated Contracting States:
**DE FR GB IT NL**

(56) References cited:
**US-A-2 790 138**
**US-A-3 119 061**

(73) Proprietor: **Schlumberger Limited**
**277 Park Avenue**
**New York, N.Y. 10172 (US)**
(84) **DE GB NL**

(73) Proprietor: **SOCIETE DE PROSPECTION**
**ELECTRIQUE SCHLUMBERGER**
**42, rue Saint-Dominique**
**F-75340 Paris Cedex 07 (FR)**
(84) **FR IT**

(72) Inventor: **Schuster, Nick A.**
**4 Stayton Circle**
**Houston Texas 77024 (US)**

(74) Representative: **Chareyron, Lucien et al**
**Schlumberger Limited Service Brevets c/o Giers**
**12, place des Etats Unis B.P. 121**
**F-92124 Montrouge Cédex (FR)**

Courier Press, Leamington Spa, England.

**0 045 243**

## Description

### Background of the invention

In the art of induction logging of boreholes, in which electromagnetic energy is transmitted into earth formations traversed by the borehole and the formation response to that transmitted energy is analyzed in order to measure the resistivity of the formation fluids, there has long been difficulty associated with the displacement of formation fluid by the drilling fluid. In porous and permeable formations, the pressure in the borehole forces the drilling fluid into a radial zone near the borehole, displacing formation fluids with drilling fluid having a different resistivity. Since the earliest patents pertaining to focussed coil systems for induction logging (U.S. Patent Nos. 2,582,314 and 2,582,315, issued to H. G. Doll on January 15, 1952) the art has attempted to reduce the contribution to the tool response made by that part of the formation invaded by the drilling fluid ("invaded zone") and by formations above and below the region of interest. For example, U.S. Patent No. 3,067,383, issued to D. R. Tanguy on December 4, 1962, discloses a sonde that has been very widely used in the industry and U.S. Patent No. 2,790,138 issued to A. Poupon on April 23, 1957 discloses the use of a plurality of electrically independent transmitter-receiver pairs arranged symmetrically about the same center point. The response of that tool is obtained by combining the response of the several electrically independent pairs, these pairs being arranged in such a manner that contributions to the tool response from formation regions lying above or below the outermost coils and from the formation region close to the borehole are reduced.

U.S. Patent UK—A—3119061 issued to D. R. Tanguy discloses an apparatus including a plurality of coils for investigating earth formations. In order to minimize the influence of electrical skin effect, the operating frequency is varied to maintain the frequency conductivity product constant. Although, in this document, it is acknowledged that short center-to-center spacing between transmitter and receiver coils is favourable to reduce the skin effect error, it is recognized that large coil spacing is desirable to obtain a greater lateral depth of investigation.

### Summary of the invention

An improved signal indicative of the true resistivity of the formation is obtained, in accordance with the invention, by the apparatus of claim 1 for the electrical investigation of earth formations traversed by a borehole.

### Description of the drawings

Fig. 1 displays a general view of a system including a sonde constructed according to the principles of the invention.

Fig. 1a illustrates the electronics portion of a preferred embodiment of the inventon.

Fig. 2 illustrates the coil arrangement of the preferred embodiment.

Fig. 3 illustrates the effective coil array after depth-shifting.

Fig. 4 illustrates a mutual inductance diagram after depth-shifting.

Fig. 5 illustrates the vertical geometrical factor for the preferred embodiment and for its component transmitter-receiver arrays.

Fig. 6 illustrates the radial geometrical factor for the preferred embodiment.

Fig. 7 illustrates the vertical geometrical factor for an alternative embodiment.

Fig. 8 illustrates schematically a coil array with a set of sonic transducers mounted in close proximity.

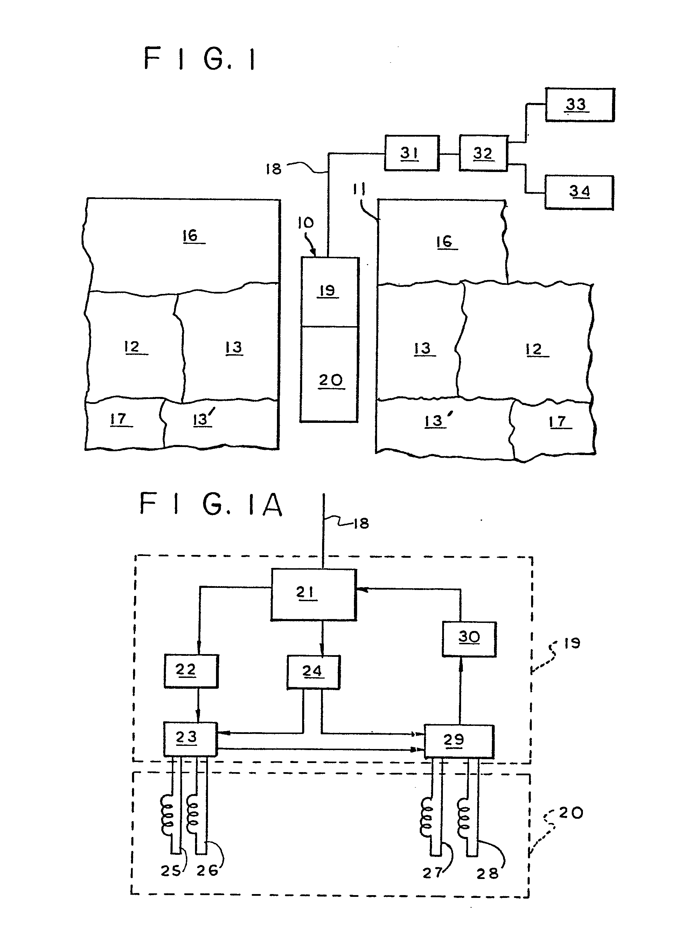

In Figure 1, an overall view of an apparatus constructed according to the invention shows sonde 10 comprising a coil array 20 and electronics cartridge 19, being drawn through borehole 11. Borehole 11 penetrates permeable formation 12 having an invaded zone 13 into which drilling mud contained in the borehole has penetrated and a virgin zone into which mud filtrate has not penetrated. The virgin zone is characterized by a resistivity Rt which is what sonde 10 is designed to measure. Permeable formation 12 lies between impermeable formation 16, which does not permit the penetration of mud filtrate 14 and more-permeable formation 17 which has an invaded zone 13' of greater diameter than invaded zone 13. The function of sonde 10 is to measure the resistivity $R_t$ of the virgin zone with as little disturbance from invaded zone 13' and formations or regions 16 and 17 as possible.

Sonde 10 is drawn through borehole 11 by means of cable 18, which is attached to a winch at the surface, the winch being omitted from the figure for better clarity. Cable 18 supports sonde 10, supplies electrical power and transmits signals between the sonde and the surface. At the surface, signals from the sonde are received in module 31, processed in circuit 32, displayed graphically in film recorder 33 and recorded on magnetic tape by recorder 34.

Within sonde 10, electronics package 19 contains circuits for transmitting to and receiving from the coil array 20 the electromagnetic signals that are used to probe the formations, together with circuits for controlling the transmitter and receiver and for interfacing with the cable. These electronic circuits are related as shown in Figure 1a, in which electronics package 19, indicated by a dotted line, contains cable interface circuit 21, connected to cable 18, which receives controlling signals, such as start and stop commands, from the surface and electric power for the downhole electronics. Package 21 supplies power to signal generator 22, operating at a predetermined frequency chosen to reduce skin effect corrections. The signal from generator 22 is amplified in transmitter 23 and supplied alternately to one of transmitter

2

coil arrays 25 and 26. Transmitter coil arrays 25 and 26 comprise one or more transmitter coils, according to the principles of the invention. The switching between arrays is regulated by controller 24, which is connected to interface circuits 21. Receiver coil arrays 27 and 28 detect signals produced by the formation in response to signals transmitted from transmitter coil arrays 25 and 26, respectively. Receiver 29 is also regulated by controller 24, in order that the response to each receiver coil array may be synchronized with the correct transmitter. Receiver 29 also receives a direct signal from transmitter 23 in order that conventional phase reference circuits within receiver 29 may separate the desired component of the signal emf that is in phase with the transmitter current from the large out-of-phase background that is always present in induction logging tools. Signals representing the amplitude of the in-phase emf from receiver coil arrays 27 and 28 are processed by circuit 30, illustratively a pair of voltage controlled oscillators and conventional associated circuits that produce two output signals of varying frequency, the frequency variations of which signals represent changes in the amplitude of the received signals from the two transmitter-receiver combinations. The frequency ranges within which the output signals vary are chosen so that the signals may conveniently be transmitted up the cable and then separated at the surface. These output signals proceed to interface circuit 21, where they are transmitted to the surface. At the surface, module 31 separates the two output frequencies produced in circuit 30 and generates signals corresponding in amplitude with the signals detected from receiver coil arrays 27 and 28. Alternatively, the magnitude of the in-phase emf may be transmitted to the surface by conventional analog or digital telemetry.

In the preferred embodiment, the response of sonde 10 is formed by combining data taken at three different depths, as well as by combining the response from the two receiver arrays. This combination is done in module 32, which stores data temporarily and then adds together data taken at different depths in order to form the final output. It should be noted that the foregoing combination of signals from different depths should be distinguished from deconvolution of the signal, as taught in U.S. Patent No. 3,166,709. Signal deconvolution may also be practiced in a tool constructed according to the principles of the present invention, in which case module 32 would be modified in a manner familiar to those skilled in the art.

It has been discovered that a combination of two-coil transmitter-receiver arrays having superior depth of investigation and suppression of adverse effects is that given in Table 1, in which TR is the product of transmitter and receiver turns, L is the spacing between the transmitters and receiver in inches and C is the location in inches of the midpoint between transmitter and receiver, relative to the sonde center. There will be many ways of realizing a sonde having properties equivalent to the coil array listed in Table 1, an important consideration being that the array have substantially zero mutual inductance, so that sensitivity to borehole effects is minimized. Some mutual inductance may be corrected for by means of supplementary coils or transformers, as taught by U.S. Patent No. 3,453,530 and a residual amount of mutual inductance may be tolerated.

TABLE 1

| Pair | TR | L | C |
|------|------|-----|------|
| 1 | 10,000 | 112 | −32 |
| 2 | 10,000 | 112 | 32 |
| 3 | −7,000 | 206 | −15 |
| 4 | −7,000 | 206 | 15 |
| 5 | −3,657.14 | 64 | −56 |
| 6 | −3,657.14 | 64 | 56 |
| 7 | 1,511.38 | 48 | 0 |
| 8 | 268.57 | 34 | −71 |
| 9 | 268.57 | 34 | 71 |
| 10 | −184.49 | 30 | −39 |
| 11 | −184.39 | 30 | 39 |
| 12 | 21.62 | 30 | −103 |
| 13 | 21.62 | 30 | 103 |

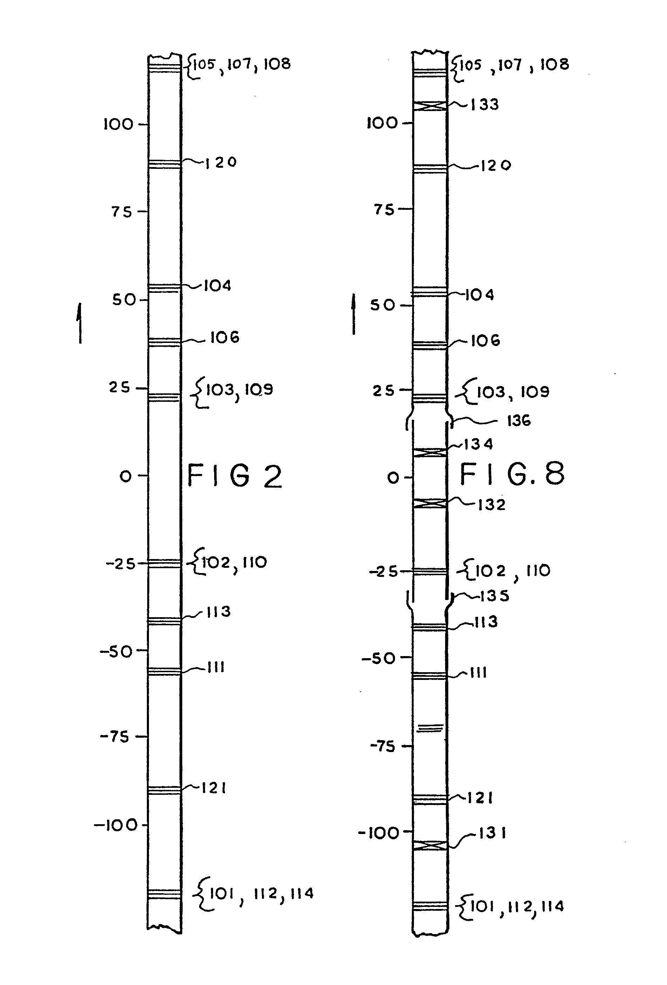

A sketch of a preferred embodiment of a coil array, having two transmitters and fourteen receivers, that is equivalent to the thirteen-pair array listed in Table 1, is shown in Figure 2. The number of turns, reference to Figure 2, polarity and positions of the coils is listed in Table 2. The wiring between coils is conventional and is omitted from the Figure for greater clarity. In this embodiment, there is a single signal generator that is time multiplexed between two transmitter coils, so that each transmitter coil interacts with only one set of receivers at a time. In operation, the first transmitting coil 120 is energized with alternating current of 4,000 HZ for a predetermined period. Receiver coils 101, 102, 103, 104, and 105, which are connected in series to form sub-group 1a, detect both a desired signal from the formation and an undesired signal directly from the transmitter. Conventional phase selecting circuitry in module 29 selects that component of the signal emf that is in phase with the transmitter current, the amplitude of which component is processed in circuit 30. A digital signal representing that amplitude is transmitted uphole by module 21. The same procedure is followed for receiver coils 106 and 107, which are connected in series to form sub-group 1b. The signals from sub-arrays 1a and 1b may be detected simultaneously or in sequence. Simultaneous measurement will require more down-hole circuitry and sequential measurement will require more time, and thus a slower logging speed. At the end of the predetermined period, transmitter 23 is connected to the transmitter coil 121 and signals are detected from sub-group 2a, comprising receiver coils 108, 109, 110, 111, and 112 and sub-group 2b, comprising receiver coils 113 and 114. Sub-groups 2a and 2b are connected in a manner similar to that of arrays 1a and 1b and the signals are detected in the same manner. Receiver sub-groups that are not in use are disabled so that they do not affect the signals from the sub-groups that are in use.

TABLE 2

| | Coil | Reference in Fig. 2 | Location of coil from sonde center (inches) | Coil turns |
|---|---|---|---|---|
| | $T_1$ | 120 | +88 | 100 |
| | $R_1$ | 101 | −118 | −70 |
| Group 1a | $R_2$ | 102 | −24 | +100 |
| | $R_3$ | 103 | +24 | −36.5714 |
| | $R_4$ | 104 | +54 | +2.6857 |
| | $R_5$ | 105 | +118 | +.2162 |
| Group 1b | $R_6$ | 106 | +40 | +7.5569 |
| | $R_7$ | 107 | +118 | −1.8449 |
| | $T_2$ | 121 | −88 | +100 |
| | $R_8$ | 108 | +118 | −70 |
| | $R_9$ | 109 | +24 | +100 |
| Group 2a | $R_{10}$ | 110 | −24 | −36.5714 |
| | $R_{11}$ | 111 | −54 | +2.6857 |
| | $R_{12}$ | 112 | −118 | +.2162 |
| Group 2b | $R_{13}$ | 113 | −40 | +7.5569 |
| | $R_{14}$ | 114 | −118 | −1.8449 |

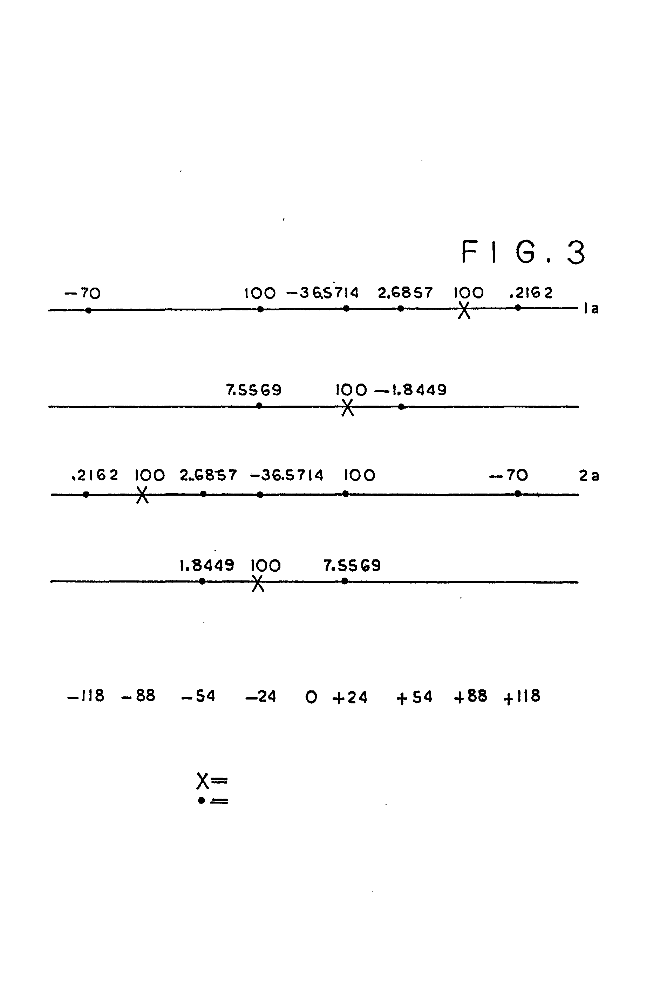

The total response of the sonde is produced by combining responses from different receivers at three different depths. The apparent resistivity of the formation at depth Z is R(Z), which depends on the response of coil sub-groups 1a and 2a at depth Z, the response of sub-group 1b at depth Z+d and the response of sub-group 2b at depth Z−d, this depth-shifting process being accomplished by storing the signals in memory circuits in module 32 and then performing the addition. In the preferred embodiment, the value of d is 64 inches. The effective location of the transmitter and receiver coils after depth-shifting is shown schematically in Figure 3, in which it can be seen that there are effectively six receiver coils located at a distance of plus and minus 24 inches from the center of the sonde. The combination of signals from sub-groups 1a and 2a may be referred to as a first-stage signal and the total of all four sub-groups may be referred to as a second-stage signal. The invention may be practiced with or without depth-shifting, but in the preferred embodiment, the improved response obtained by depth-shifting outweighs the complexity introduced thereby.

It would not be difficult to produce a sonde having a great depth of investigation by using a long spacing between main coils and then cancelling some of that response by having an opposite coil pair with a slightly smaller spacing to reduce borehole effects, but such a sonde would have very poor focussing properties in the vertical direction, so that bed edge boundaries would be obscured and thin beds would produce inaccurate responses.

The principles of the present invention permit the construction of sondes in which deep radial investigation is combined with superior vertical resolution, through the medium of overlapping reinforcing transmitter-receiver arrays that have a combined response having the beneficial properties of substantially zero mutual inductance. The radial and vertical properties of sondes constructed according to the invention may be varied very simply by scaling the spacing between coils, an operation that does not change the zero-mutual property. The preferred embodiment has been designed so that it has vertical properties similar to a commonly used sonde having the same vertical resolution but has less shoulder effect. The result of the present invention has been that the radial properties are very much superior. Alternatively, a sonde could be constructed with half the inter-coil spacing of the preferred embodiment and, as a result, essentially the same radial properties as a commonly used sonde and much better vertical properties. This alternative sone would be useful in regions where it is important to locate thin beds and/or to locate bed boundaries accurately. A preferred frequency of operation for this alternative embodiment is 16,000 HZ. Compromise sondes having both radial and vertical properties superior to those presently available could also be constructed.

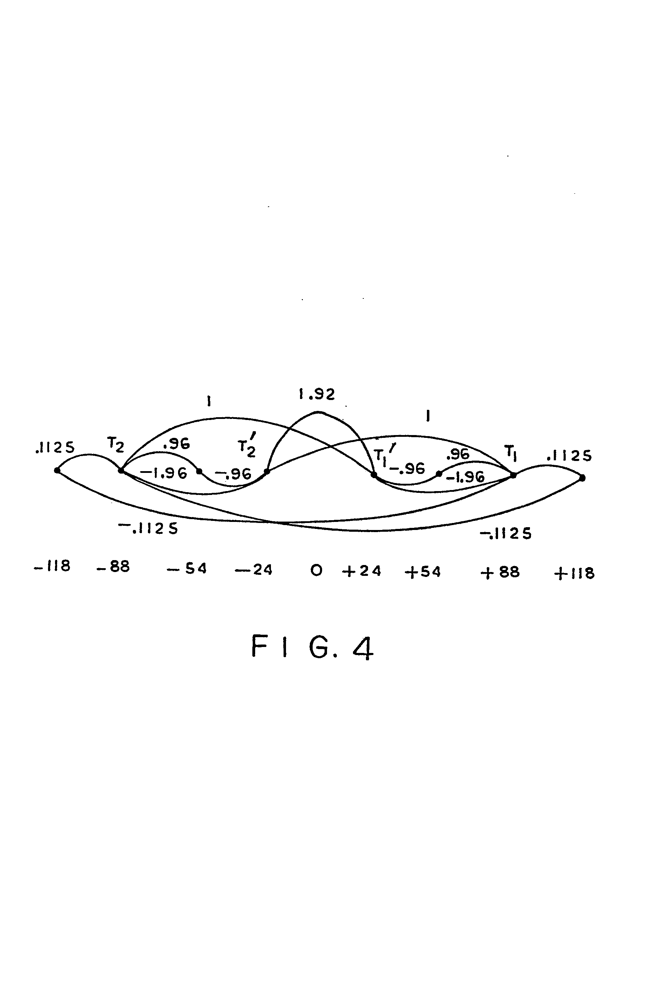

Figure 4 illustrates the mutual inductance of the actual coil array after depth-shifting. The effective location of the transmitters is indicated by T's, the depth-shifting producing four effective transmitter locations for two actual transmitters. The relative magnitude of the mutual inductance between nodes of the diagram is indicated in Figure 4 for each pair of interacting coils. It is apparent by inspection that the sum of the mutual inductances at all the nodes is zero. The inductances shown in Figure 4 have been normalized for convenience so that the mutual inductance between T1 and R2 is taken to be unity. Referring back to Figure 3, and considering the point at −24 inches as an example, it can be seen that, at that point, group 2b has a sum of inductances that equals 0 and that groups 1a, 1b and 2a together combine to give zero mutual inductance. The first-stage signal made by combining the responses from sub-groups 1a and 2a (at the depth in the borehole corresponding to −24 inches) has a net mutual inductance. It is the combination of all four sub-groups that produces zero mutual inductance at the coil locations.

Beneficial results of the use of overlapping groups and depth-shifting may be observed in Figure 4. The main transmitter-receiver pairs (T1—R2 and T2—R9) are associated with the positive loops having a weight of +1 and the subsidiary coil pairs that help to cancel borehole effects (T1—R3 and T2—R10) are associated with the negative loops having a weight of −1.96. As is noted above, these four pairs are connected in two electrically independent groups that overlap. An advantageous feature of the overlap is that, near the sonde center between plus and minus 24 inches, the two arrays reinforce, thus combining the well-known beneficial effects of the suppression of borehole effects by cancellation between the larger and smaller-spaced coil pairs of each array with improved radial sensitivity by reinforcement of the net effect of the two electrically independent groups. Further, the positive loop with the weight 1.92 is placed at the sonde center by depth-shifting subsidiary arrays 1b and 2b, thus achieving an additional positive reinforcement without disturbance of the beneficial zero-mutual property. In discussing the overlap feature, it is convenient to refer to the coils of group 1 from −24 inches to +118 inclusive as the "upper portion of the first group" and the coils of group 2 from +24 inches to −118 inches inclusive as the "lower portion of the second group". Both groups extend from +118 inches to −118 inches.

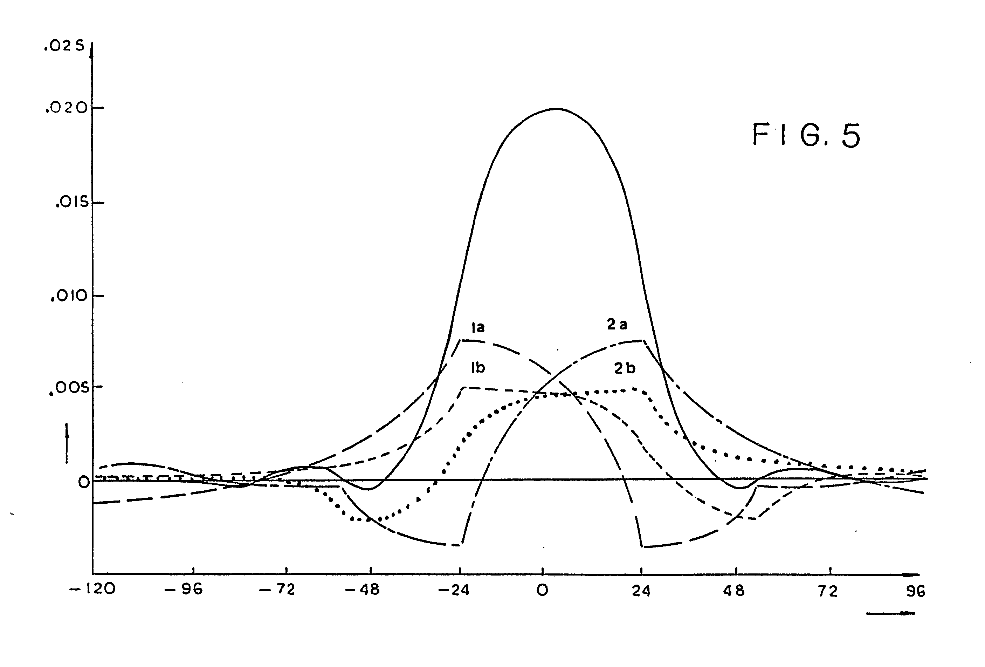

In Figure 5, the vertical geometrical factors for the four sub-groups of coils and their combination are displayed. It is evident by inspection of this figure that the upper portion of groups 1a and 1b combine with the lower portion of groups 2a and 2b within the overlap region and also that the net combination of the four groups combine to reduce sharply the response above and below the overlap region, thus advantageously reducing the shoulder effect and improving the vertical resolution. It may bear repeating that the curves labelled 1b and 2b represent the response of sub-groups 1b and 2b after depth-shifting and that the depth-shifting is not essential to the practice of the invention in its broadest form but is an improvement that permits coils to be effectively placed in locations that would be physically awkward without depth-shifting.

Although the preferred embodiment has the desirable zero-mutual property, that is not essential for the practice of the invention. An alternative embodiment of the invention eliminates the small coils $R_5$ and $R_{12}$ at the extreme ends of the sonde and adjusts slightly some other coil turn numbers, as is shown in Table 3. The effective length of coil groups 1 and 2 after depth-shifting is less than in the preferred embodiment, and the total length of the sonde is the same. There is also a small amount of residual mutual inductance. This alternate embodiment is not only simpler to construct, but also has the advantageous

## 0 045 243

property of having a smoother response to the effect of boundary between formations, one of which has a resistivity very much greater than the other, than does the preferred embodiment and it may be used in place of the preferred embodiment where the residual mutual inductance may be tolerated.

TABLE 3

| | Coil | Location of coil from sonde center (inches) | Coil turns |
|---|---|---|---|
| | $T_1$ | +88 | 100 |
| Group $1_a$ | $R_1$ | −118 | −65 |
| | $R_2$ | −24 | +100 |
| | $R_3$ | +24 | −35.84 |
| | $R_4$ | +54 | 2.8632 |
| Group $1_b$ | $R_6$ | +40 | 7.33 |
| | $R_7$ | +118 | −1.7895 |
| | $T_2$ | −88 | +100 |
| Group $2_a$ | $R_8$ | +118 | −65 |
| | $R_9$ | +24 | +100 |
| | $R_{10}$ | −24 | −35.84 |
| | $R_{11}$ | −54 | 2.8632 |
| Group $2_b$ | $R_{13}$ | −40 | 7.33 |
| | $R_{14}$ | +118 | −1.7895 |

Figure 5 shows normalized curves illustrating the vertical sensitivity of the preferred embodiment and its sub-groups 1a and 2a, which are fixed in relation to one another, and 1b and 2b, which are depth-shifted. The several curves combine to reinforce sharply in the region between plus and minus twenty four inches from the sonde center, referred to as the investigation or overlap region, and combine to cancel above and below that region. As a result of this combination, the response of the sonde (and its characteristic response or sensitivity curves) is sharply peaked at the region of the formation that is at the same depth as the investigation region. It is evident that the response curves of the separate groups peak at different locations along the support members and that the several curves are vertically asymmetric. It is advantageous that the largest negative areas of these curves, which cancel corresponding positive areas, are those of the fixed arrays, which are not susceptible to errors from the depth-shifting process. Because of sticking of the sonde in the borehole and stretch in the cable, the response of the depth-shifted sub-groups 1b and 2b will be sometimes combined at an incorrect depth and the average response of the sonde will be somewhat degraded from that shown here.

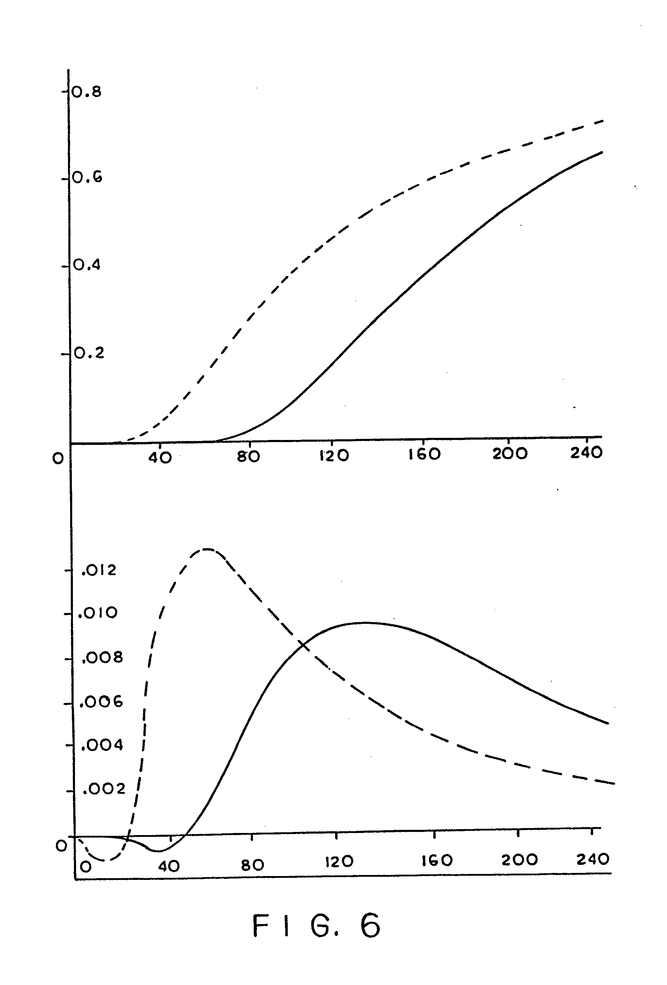

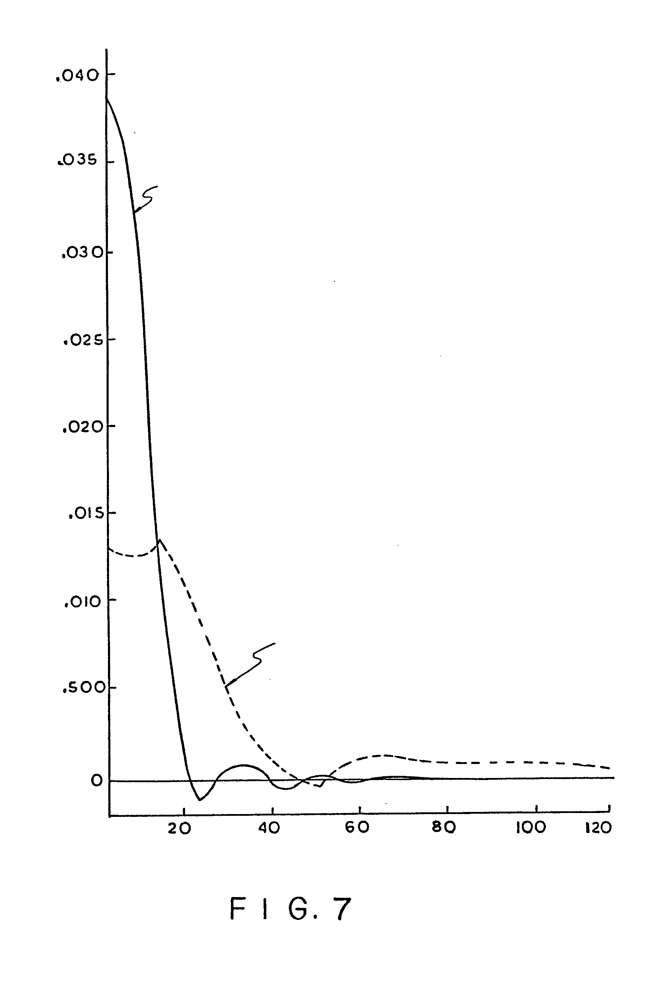

In Figure 6, the radial geometrical factor of the preferred embodiment is compared with the factor for a commonly used sonde. The improved insensitivity to the borehole and invaded zone regions of the preferred embodiment is readily apparent. In Figure 7, the vertical geometrical factor of the alternative embodiment is compared with that of the same commonly used sonde. Compromise sondes having dimensions between these shown in the two embodiments described and having intermediate properties will be readily apparent to those skilled in the art.

Referring again to Figure 5, it is apparent that the invention involves the use of coil arrays that overlap on one side so that their response functions reinforce each other at the center of the sonde and cancel at the top and bottom. Sub-groups 1a and 1b alone would combine to produce a response having vertical dependence considerably less good than that of the total response of the sonde. If there were one transmitter-receiver array instead of two electrically independent arrays, the problem of suppressing the borehole effects by minimizing the mutual inductance would be much more severe. In this particular embodiment, both independent arrays have the same radial response, but that is not necessary for the

**0 045 243**

practice of the invention in its broadest scope. It will be evident to those skilled in the art that independent overlapping arrays having different radial responses may be combined.

Another feature of the invention that appears in the preferred embodiment is the use of asymmetric arrays that are mirror images of one another to produce a combined response that is both symmetric and sharply focussed in the vertical direction.

The spacing between coils in the preferred embodiment is considerably greater than that in standard commercially used sondes and the frequency is lower, with the result that the receiver signal level in this embodiment will be reduced by a substantial factor compared with the prior art sonde used for comparison. This factor may be recovered by using low loss ferrite magnetic cores in the coils, such as those made by the Magnetic Corporation, Butler, Pa., as indicated in Table 4.

TABLE 4

| Core | Coils |
|---|---|
| 201 | 101, 112, 114 |
| 202 | 122 |
| 203 | 111 |
| 204 | 113 |
| 205 | 102 and 110 |
| 206 | 103 and 109 |
| 207 | 106 |
| 208 | 104 |
| 209 | 121 |
| 210 | 105, 107, and 108 |

Because of the strong effect of the cores, it may be desirable to utilize two auxiliary circuits to cancel out some of the direct magnetic coupling between the transmitters and the cores that are nearby. For example, a small current accurately in phase with the current applied to transmitter 121 can be fed to small auxiliary coils wound on cores 206, 207, 208 and 210 and a similar current in phase with the current applied to transmitter 122 can be fed to coils wound on cores 201, 203, 204 and 205. The use of such small auxiliary circuits would improve the performance of the sonde in two ways: by cancelling the mutual inductance that would actually arise between the transmitters and the theoretically independent array and by cancelling the extra dipole moments caused by the magnetic cores that would otherwise perturb the magnetic fields.

The depth-shifting process may be dispensed with, either by use of a different combination of transmitter and receiver coils or by the inclusion of additional coils and associated receiver coils.

An embodiment might be constructed that employs a plurality of different frequencies and associated circuits to isolate the two arrays rather than the time-multiplexing of the illustrative embodiment. Such an embodiment would permit simultaneous measurement of both arrays and thus a faster logging speed.

**Claims**

1. Apparatus for the electrical investigation of earth formations traversed by a borehole comprising a plurality of transmitter and receiver coils disposed at predetermined positions along a support member, means for energizing said plurality of transmitter coils, and means for detecting and processing signals from said receiver coils, said plurality of coils being interconnected to form at least two electrically independent transmitter-receiver coil groups and said plurality of coils being disposed along said support member, characterized in that said plurality of coils is disposed so that an upper portion of a first coil group overlaps a lower portion of a second coil group in an overlap region.

2. An apparatus according to claim 1, characterized in that the responses of said electrical independent coil groups reinforce in said overlap region, whereby said apparatus responds preferentially to that part of the formation that is at the same depth as said overlap region of said coil groups.

3. An apparatus according to claim 2, characterized in that the responses of said coil groups above and below said overlap region partially cancel, whereby said apparatus is rendered less sensitive to portions of the formation above and below said overlap region.

4. An apparatus according to claim 3, in which the combined mutual inductance of said electrically independent coil groups at said predetermined positions is approximately zero.

7

5. An apparatus according to any one of claim 1 to 4, characterized in that each of said transmitter-receiver coil groups is asymmetric.

6. An apparatus according to claim 5, in which at least two of said transmitter-receiver coil groups are mirror images of one another.

7. An apparatus according to any one of the previous claims, characterized in that the receiver coils of two of said electrically independent transmitter-receiver coil groups are divided into at least two sub-groups of receiver coils, the signals from the sub-groups being separately detected, said apparatus being built to form a combined output signal by combining responses from said sub-groups.

8. An apparatus according to claim 7, characterized in that an output signal from a first sub-group of said first group and an output signal from a first sub-group of said second group taken at a given depth are combined with an output signal from a second sub-group of said first group measured at a first depth related to said given depth by a first predetermined amount and an output signal from a second sub-group of said second group measured at a second depth related to said given depth by a second predetermined amount.

9. An apparatus according to any one of the previous claims, characterized in that said at least two electrically independent transmitter-receiver coil groups are responsive to different frequencies.

10. An apparatus according to any one of the previous claims, characterized in that said at least two electrically independent transmitter-receiver coil groups are energized in sequence.

11. The apparatus of any one of the previous claims wherein at least one of said groups comprises a transmitter coil, and characterized by a main receiver coil spaced a main predetermined distance along said support member from said first transmitter coil, a first subsidiary coil having a lesser number of turns and polarity opposite to that of said main receiver coil and spaced a first predetermined distance along said support member from said transmitter coil and a second subsidiary coil having a lesser number of turns and polarity the same as that of said main receiver coil and spaced a second predetermined distance along said support member from said transmitter coil.

12. An apparatus according to claim 11, characterized in that said first subsidiary coil has between one-third and one-half as many coil turns as said main receiver coil and said second subsidiary coil has less than one-tenth as many turns as said main receiver coil.

13. An apparatus according to claim 11 or 12, characterized in that said first predetermined distance is less than two-thirds of said main predetermined distance and said second predetermined distance is less than half of said main predetermined distance.

14. An apparatus according to claim 13, characterized in that said first predetermined distance is approximately fifty-seven percent of said main predetermined distance, said second predetermined distance is approximately forty-three percent of said main predetermined distance, said first subsidiary coil has approximately thirty-seven percent as many turns as said main receiver coil and said second subsidiary coil has approximately eight percent as many coil turns as said main receiver coil.


**Patentansprüche**

1. Vorrichtung für die elektrische Untersuchung von Erdformationen, durchteuft von einem Borhrloch, umfassend eine Mehrzahl von Sender- und Empfängerspulsen, die an vorgegebenen Positionen längs eines Trägers angeordnet sind, Mittel zum Erregen der genannten Mehrzahl von Senderspulen, und Mittel für die Erfassung und Verarbeitung von Signalen von den genannten Empfängerspulen, wobei die genannt Mehrzahl von Spulen zusammengeschaltet ist zur Ausbildung von zumindest zwei elektrisch unabhängigen Sender-Empfänger-Spulen-Gruppen und die genannte Mehrzahl von Spulen längs des genannten Trägers angeordnet ist, dadurch gekennzeichnet, daß die genannte Mehrzahl von Spulen derart angeordnet ist, daß ein oberer Teil einer ersten Spulengruppe einen unteren Teil einer zweiten Spulengruppe in einem Überlappungsbereich überlappt.

2. Vorrichtung nach Anspruch 1, dadurch gekennzeichnet, daß das Ansprechen der genannten elektrisch unabhängigen Spulengruppen in dem genannten Überlappungsbereich verstärkt ist, derart, daß die genannte Vorrichtung vorzugsweise auf denjenigen Teil der Formation anspricht, der in derselben Tiefe ist wie der genannte Überlappungsbereich der genannten Spulengrupen.

3. Vorrichtung nach Anspruch 2, dadurch gekennzeichnet, daß das Ansprechen der genannten Spulengruppen oberhalb und unterhalb des genannten Überlappungsbereichs einander teilweise auslöscht, derart, daß die genannte Vorrichtung weniger empfindlich ist gegenüber Formationsabschnitten oberhalb und unterhalb des genannten Überlappungsbereichs.

4. Vorrichtung nach Anspruch 3, in der die kombinierte Gegeninduktanz der genannten elektrisch unabhängigen Spulengruppen in den genannten vorgegebenen Positionen näherungsweise Null ist.

5. Vorrichtung nach einem der Ansprüche 1 bis 4, dadurch gekennzeichnet, daß jede der genannten Sender-Empfänger-Spulengruppen asymmetrisch ist.

6. Vorrichtung nach Anspruch 5, in der mindestens zwei der genannten Sender-Empfänger-Spulengruppen zueinander spiegelbildlich sind.

7. Vorrichtung nach einem der vorangehenden Ansprüche, dadurch gekennzeichnet, daß die Empfänger-Spulen von zwei der genannten elektrisch unabhängigen Sender-Empfänger-Spulengruppen in zumindest zwei Untergruppen von Empfänger-Spulen unterteilt sind, wobei die Signale von den

**0 045 243**

Untergruppen separat erfaßt werden, und wobei die genannte Vorrichtung so ausgebildet ist, daß sie ein kombiniertes Ausgangssignal bildet durch Kombinieren des Ansprechens von den genannten Untergruppen.

8. Vorrichtung nach Anspruch 7, dadurch gekennzeichnet, daß ein Ausgangssignal von einer ersten Untergruppe der genannten ersten Gruppe und ein Ausgangssignal von einer ersten Untergruppe der genannten zweiten Gruppe, an einer gegebenen Tiefe aufgenommen, kombiniert werden mit einem Ausgangssignal von einer zweiten Untergruppe der genannten ersten Gruppe, gemessen an einer ersten Tiefe, die um einen vorgegebenen Betrag in Beziehung steht zu der genannten gegebenen Tiefe, und einem Ausgangssignal von einer zweiten Untergruppe der genannten zweiten Gruppe, gemessen an einer zweiten Tiefe, um einen zweiten vorgegebenen Betrag in Beziehung mit der genannten gegebenen Tiefe stehend.

9. Vorrichtung nach einem der vorangehenden Ansprüche, dadurch gekennzeichnet, daß die genannten mindestens zwei elektrisch unabhängigen Sender-Empfänger-Spulengruppen auf unterschiedliche Frequenzen ansprechend sind.

10. Vorrichtung nach einem der vorangehenden Ansprüche, dadurch gekennzeichnet, daß die genannten mindestens zwei elektrisch unabhängigen Sender-Empfänger-Spulengruppen sequentiell erregt werden.

11. Vorrichtung nach einem der vorangehenden Ansprüche, worin zumindest eine der genannten Gruppen eine Sender-Spule umfaßt, und gekennzeichnet durch eine Hauptempfänger-Spule, die in einem vorgegebenen Hauptabstand längs des genannten Trägers von der genannten ersten Sender-Spule angeordnet ist, eine erste Hilfsspule mit einer geringeren Anzahl von Windungen und einer Polarität entgegengesetzt der der genannten Hauptempfänger-Spule und in einem ersten vorgegebenen Abstand längs des genannten Trägerkörpers von der genannten Sender-Spule angeordnet, und eine zweite Hilfsspule mit einer geringeren Anzahl von Windungen und derselben Polarität wie die genannte Hauptempfänger-Spule und in einem zweiten vorgegebenen Abstand längs des genannten Trägerkörpers von der genannten Sender-Spule angeordnet.

12. Vorrichtung nach Anspruch 11, dadurch gekennzeichnet, daß die genannte erste Hilfsspule eine Windungszahl aufweist, die zwischen einem Drittel und der Halfte der Windungszahl der genannten Hauptempfänger-Spule liegt und daß die genannte zweite Hilfsspule eine Windungszahl aufweist, die kleiner ist als ein Zehntel der Anzahl von Windungen der genannten Hauptempfänger-Spule.

13. Vorrichtung nach Anspruch 11 oder 12, dadurch gekennzeichnet, daß der erste vorgegebene Abstand kleiner ist als zwei Drittel des genannten vorgegebenen Hauptabstandes und daß der zweite vorgegebene Abstand kleiner ist als die Hälfte des genannten vorgegebenen Hauptabstandes.

14. Vorrichtung nach Anspruch 13, dadurch gekennzeichnet, daß der genannte erste vorgegebene Abstand etwa siebenundfünfzig Prozent des genannten vorgegebenen Hauptabstandes beträgt, der genannte zweite vorgegebene Abstand etwa dreiundvierzig Prozent des genannten vorgegebenen Hauptabstandes beträgt, die genannte erste Hilfsspule eine Windungszahl von etwa siebenunddreißig Prozent der Windungszahl der Hauptempfänger-Spule hat und die genannte zweite Hilfsspule eine Windungszahl von etwa acht Prozent der Windungszahl der Hauptempfänger-Spule hat.

**Revendications**

1. Dispositif pour l'exploration, par voie électrique, des formations terrestres traversées par un sondage comportant une pluralité de bobines émettrices et réceptrices disposées à des emplacements prédéterminés le long d'un support, des moyens pour exciter ladite pluralité de bobines émettrices, et des moyens pour détecter et traiter les signaux provenant desdites bobines réceptrices, ladite pluralité de bobines étant interconnectée pour former au moins deux groupes électriquement indépendants de bobines émettrices-réceptrices et ladite pluralité de bobines étant disposée le long dudit support, caractérisé en ce que ladite pluralité de bobines est disposée de façon qu'une partie supérieure d'un premier groupe de bobines chevauche une partie inférieure d'un deuxième groupe de bobines sur une zone de chevauchement.

2. Dispositif selon la revendication 1, caractérisé en ce que les réponses desdits groupes électriquement indépendants de bobines se renforcent dans ladite zone de chevauchement, de sorte que le dispositif répond, de préférence, à la partie de la formation qui se trouve à la même profondeur que la zone de chevauchement desdits groupes de bobines.

3. Dispositif selon la revendication 2, caractérisé en ce que les réponses desdits groupes de bobines au-dessus et au-dessous de la zone de chevauchement s'annulent en partie, de sorte que ledit dispositif est rendu moins sensible aux parties de la formation situées au-dessus et au-dessous de ladite zone de chevauchement.

4. Dispositif selon la revendication 3 dans lequel l'inductance mutuelle combinée desdits groupes de bobines électriquement indépendants auxdits emplacements prédéterminés est approximativement zéro.

5. Dispositif selon l'une quelconque des revendications 1 à 4, caractérisé en ce que chacun desdits groupes de bobines émettrices-réceptrices est asymétrique.

6. Dispositif selon la revendication 5, dans lequel au moins deux desdits groupes de bobines émettrices-réceptrices sont les images-miroir l'un de l'autre.

9

7. Dispositif selon l'une quelconque des revendications précédentes, caractérisé en ce que les bobines réceptrices de deux desdits groupes de bobines émettrices-réceptrices électriquement indépendants sont divisés en au moins deux sous-groupes de bobines réceptrices, les signaux provenant des sous-groupes étant détectés séparément, ledit dispositif étant agencé pour former un signal combiné de sortie en combinant les réponses desdits sous-groupes.

8. Dispositif selon la revendication 7, caractérisé en ce qu'un signal de sortie provenant d'un premier sous-groupe dudit premier groupe et un signal de sortie provenant d'un premier sous-groupe dudit deuxième groupe, enregistrés à une profondeur donnée, sont combinés avec un signal de sortie d'un deuxième sous-groupe dudit premier groupe, mesuré à une première profondeur liée à ladite profondeur donnée par une première quantité prédéterminée et avec un signal de sortie d'un deuxième sous-groupe dudit deuxième groupe, mesuré à une deuxième profondeur liée à ladite profondeur donnée par une deuxième quantité prédéterminée.

9. Dispositif selon l'une quelconque des revendications précédentes, caractérisé en ce qu'au moins lesdits deux groupes de bobines émettrices-réceptrices électriquement indépendants sont sensibles à des fréquences différentes.

10. Dispositif selon l'une quelconque des revendications précédentes caractérisé en ce qu'au moins lesdits deux groupes de bobines émettrices-réceptrices électriquement indépendants sont excités séquentiellement.

11. Dispositif selon l'une quelconque des revendications précédentes, dans lequel au moins un desdits groupes comprend une bobine émettrice, et caractérisé par une bobine réceptrice principale espacée, le long dudit support, d'une distance principale prédéterminée par rapport à ladite première bobine émettrice, une première bobine auxiliaire ayant un nombre plus réduit de spires et de polarité opposée à celle de ladite bobine réceptrice principale et espacée le long dudit support d'une première distance prédéterminée par rapport à ladite bobine émettrice et une deuxième bobine auxiliaire ayant un nombre plus réduit de spires et de même polarité que celle de ladite bobine réceptrice principale et espacées le long dudit support d'une deuxième distance prédéterminée par rapport à ladite bobine émettrice.

12. Dispositif selon la revendication 11, caractérisé en ce que ladite première bobine auxiliaire comporte entre un tiers et la moitié du nombre de spires de ladite bobine réceptrice principale, et ladite deuxième bobine auxiliaire comporte moins du dixième du nombre de spires de ladite bobine réceptrice principale.

13. Dispositif selon la revendication 11 ou 12, caractérisé en ce que ladite première distance prédéterminée est inférieure aux deux tiers de ladite distance principale prédéterminée et la deuxième distance prédéterminée est inférieure à la moitié de ladite distance principale prédéterminée.

14. Dispositif selon la revendication 13, caractérisé en ce que ladite première distance prédéterminée est approximativement égale à 57 pour cent de ladite distance principale prédéterminée; ladite deuxième distance prédéterminée est approximativement égale à 43 pour cent de ladite distance principale prédéterminée; ladite première bobine auxiliaire comporte approximativement 37 pour cent du nombre de spires de ladite bobine réceptrice principale et ladite deuxième bobine auxiliaire comporte approximativement 8 pour cent du nombre de spires de ladite bobine réceptrice principale.

FIG. 1

FIG. IA

FIG 2

FIG. 8

# F I G . 3

```
  -70                    100  -36.5714  2.6857  100   .2162
 ●——————————————————————●————————●——————●———X———●————— 1a


                   7.5569      100 -1.8449
 —————————————————————●————————X———————●————————————————


  .2162  100  2.6857  -36.5714  100                 -70      2a
 ——————●———X————●——————●————————●—————————————————————●—————


                   1.8449  100   7.5569
 —————————————————————●————————X———————●————————————————
```

-118  -88   -54   -24   0  +24   +54  +88  +118


X=
●=

F I G. 4

FIG.5

F I G. 6

F I G. 7